# EUROPEAN PATENT SPECIFICATION

(11) **EP 0 692 932 B1**
(45) Date of publication and mention of the grant of the patent: **12.01.2000**
(21) Application number: 94913552.9
(22) Date of filing: 06.04.1994
(51) Int. Cl.: A01N 53/00

(54) **SOLID CROP PROTECTION FORMULATION**
FESTE PFLANZENSCHUTZFORMULIERUNG
FORMULATION SOLIDE POUR LA PROTECTION DES CULTURES

(30) Priority: 08.04.1993 EP 93302792
(43) Date of publication of application: 24.01.1996
(73) Proprietor: SHELL INTERNATIONALE RESEARCH MAATSCHAPPIJ B.V., 2596 HR Den Haag (NL)
(72) Inventor: HAMMOND, Robert Bryan, Sittingbourne, Kent ME10 1UL (GB); WEDLOCK, David John, Bunbury, Tarporley, Cheshire CW69NQ (GB)
(74) Representative: Wileman, David Francis, Dr.
(86) International application number: EP9401087
(87) International publication number: WO9423579

(56) References cited:
- EP-A- 0 147 947
- EP-A- 0 369 612
- EP-A- 0 413 402
- CHEMICAL ABSTRACTS, vol. 112, no. 1, 1 January 1990, Columbus, Ohio, US; abstract no. 2630k, R.J.H.VENTER 'Water-disintegrable insecticidal tablet' page 267 ; & ZA,A,8 805 890 (CIBA-GEIGY (PTY.) LTD.) 26 April 1989
- CHEMICAL ABSTRACTS, vol. 108, no. 15, 11 April 1988, Columbus, Ohio, US; abstract no. 126698a, J.MORAVEC ET. AL. 'Insecticidal ectoparasiticidal compositions containing vinylpyrrolidone polymers' page 276 ; & CS,A,238 753 (J.MORAVEC ET. AL.) 15 April 1987

## Description

The present invention relates to crop protection formulations which are in solid form, for example powder, granules or tablets.

Crop protection agents are formulated in solid or liquid compositions, usually in the form of a concentrate for ease of handling and transportation, which is diluted with water by the user before application. Often a surface active agent is required to facilitate dilution and is incorporated into the formulation.

Liquid formulations in the form of emulsifiable concentrates contain a very high proportion of organic solvent (often up to 80 percent) which are increasingly coming under scrutiny for their effect on the environment; emulsion concentrates have a higher water content but still contain organic solvents. Suspension concentrates, another water-based liquid form, are often viscous giving rise to handling problems and loss of active ingredient through retention in the packaging.

Solid formulations can also have disadvantages; the more common granules and powders in particular can be difficult to measure but more importantly can be dusty and pose inhalation hazards for the formulator and the user. Tablets have not been used extensively because they are often slow to dissolve. In addition, solid formulations have been found generally to possess a lower biological activity than liquid formulations. Also, with unsophisticated mixing techniques at the site of use, usually in a farmer's field, the tendency of solid forms not to disperse immediately can cause not only clogging of spray equipment with undispersed formulation, but also an inadequate application of active ingredient to the crop to be treated.

Thus, there is a need for a fast-dispersing solid crop protection formulation which has better handling characteristics and enhanced biological activity over conventional forms, to satisfy both environmental concerns and provide an effective product for the farmer to use in an unsophisticated manner in the field.

European Patent Application No. 90202212.8 (Publication No. 0413402) (Shell) refers to a solid pesticidal formulation including as active ingredient, an organotin compound and the use of such a formulation in combating pests. Comparative Example 12 refers to the preparation, by a solvent evaporation process, of a solid concentrate formulation of polyvinylpyrrolidone and the commercially available pyrethroid insecticide alpha cypermethrin. The acaricidal activity of the polyvinylpyrrolidone/alpha cypermethrin formulation is compared with that of a standard suspension concentrate formulation of alpha cypermethrin. The results indicate that a solid concentrate formulation of pyrethroid insecticide alpha cypermethrin exhibits only an equivalent acaricidal activity in comparison with the standard suspension concentrate.

This invention is based upon the discovery of enhanced aphicidal activity of a solid concentrate formulation of polyvinylpyrrolidone and pyrethroid insecticides.

According to a first aspect of the present invention, there is provided a method of combating aphid pests at a locus, the method comprising applying to the locus an aqueous dispersion prepared by dispersing a solid concentrate which comprises polyvinylpyrrolidone and a pyrethroid insecticide in water.

It was expected that the dispersion of the solid concentrate of polyvinylpyrrolidone and a pyrethroid insecticide in water would have aphicidal activity of a similar level to that of a suspension concentrate of the pyrethroid insecticide. Surprisingly this has been found not to be the case - the aqueous dispersion of the invention has an activity which is of a similar level to that found for an emulsion concentrate of the pyrethroid insecticide. Thus, the invention may provide an advantageous method of combating aphid pests, using a pyrethroid, which obviates the need to deliver the pyrethroid insecticide in a liquid formulation having a very high proportion of an organic solvent.

A broad range of pyrethroid insecticides for use in the present invention are disclosed in the following publications: U.K. Patent Application No. 1 413 491 (NRDC), European Patent Application No. 22382 (FMC), European Patent Application No. 107296 (ICI), U.K. Patent Application No. 1 565 932 (Bayer), U.K. Patent Application No. 1 439 615 (Sumitomo), U.K. Patent Application No. 1 560 303 (Sumitomo), U.K. Patent Application No. 2 013 206 (Sumitomo), and U.K. Patent Application No. 2 064 528 (Shell).

Examples of commercial pyrethroid insecticides for use in the present invention include: 5-benzyl-3-furylmethyl(E)-(1R)-cis-2,2-dimethyl-3-(2-oxothiolan-3-ylidenemethyl)cyclopropanecarboxylate; permethrin (3-phenoxybenzyl(1RS)-cis-trans-3-(2,2-dichlorovinyl)-2,2- dimethylcyclopropanecarboxylate); fenpropathrin ((RS)-α-cyano-3-phenoxybenzyl 2,2,3,3-tetramethylcyclopropanecarboxylate);esfenvalerate((S)-α-cyano-3-phenoxybenzyl(S)-2(4-chlorophenyl)-3-methylbutyrate); fenvalerate ((RS)-cyano-3-phenoxybenzyl(RS)-2-(4-chlorophenyl)-3-methylbutyrate); cyfluthrin ((RS)-α-cyano-4-fluoro-3-phenoxybenzyl(1RS)-cis-trans-3-(2,2-dichlorovinyl)-2,2-dimethylcyclopropanecarboxylate); beta-cyfluthrin (a reaction mixture comprising two enantiomeric pairs in approximate ratio 1:2, i.e. (S)-α-cyano-4-fluoro-3-phenoxybenzyl(1R)-cis-3-(2,2-dichlorovinyl)-2,2-dimethylcyclopropanecarboxylate and (R)-α-cyano-4-fluoro-3-phenoxybenzyl(1S)-cis-3-(2,2-dichlorovinyl)-2,2-dimethylcyclopropanecarboxylate with (S)-α-cyano-4-fluoro-3-phenoxybenzyl (1R)-trans-3-(2,2-dichlorovinyl)-2,2-dimethylcyclopropanecarboxylate and (R)-α-cyano-4-fluoro-3-phenoxybenzyl(1S)-trans-3-(2,2-dichlorovinyl)-2,2-dimethylcyclopropanecarboxylate); lambda-cyhalothrin (a reaction product comprising equal quantities of (S)-α-cyano-3-phenoxybenzyl(Z)-(1R)-cis-3-(2-chloro-3,3,3-trifluoropropenyl)-2,2-dimethylcyclopropanecarboxylate and (R)-α-cyano-3-phenoxybenzyl(Z)-(1S)-cis-3-(2-chloro-3,3,3-trifluoropropenyl)-2,2-dimethylcyclopropanecarboxylate); cyhalothrin ((RS)-α-cyano-3-phenoxybenzyl(Z)-(1RS)-cis-3-(2-chloro-3,3,3-trifluoropropenyl)-2,2-dimethylcyclopropanecarboxylate); deltamethrin ((S)-α-cyano-3-phenoxybenzyl(1R)-cis-3-(2,2-dibromovinyl)-2,2-dimethylcyclopropanecarboxylate); cypermethrin ((RS)-α-cyano-3-phenoxybenzyl(1RS)-cis-trans-3-(2,2-dichlorovinyl)-1,1-dimethylcyclopropanecarboxylate); and alpha-cypermethrin (a racemate comprising (S)-α-cyano-3-phenoxybenzyl(1R)-cis-3-(2,2-dichlorovinyl)-2,2-dimethylcyclopropanecarboxylate and (R)-α-cyano-3-phenoxybenzyl(1S)-cis-3-(2,2-dichlorovinyl)-2,2- dimethylcyclopropanecarboxylate).

Preferably, said pyrethroid insecticide for use in the method of the invention is of general formula: 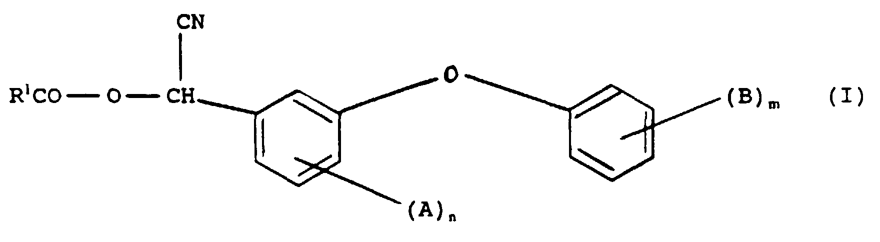 where A and B independently represent a halogen atom or a methyl group; n is 0, 1 or 2; m is 0, 1 or 2; and R¹ represents a group of general formula: 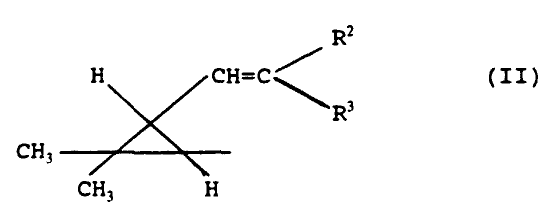 where R² and R³ independently represent a hydrogen or halogen atom, or an optionally substituted C₁₋₄ alkyl group; or R¹ represents a group of general formula: 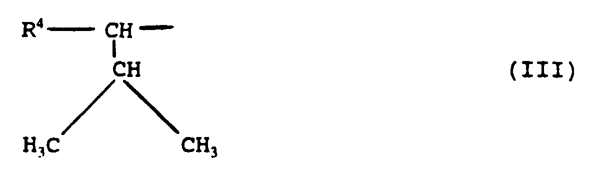 where R⁴ represents a phenyl group optionally substituted by one or more substituents independently selected from halogen atoms, or C₁₋₄ alkyl, C₁₋₄ alkylthio, C₁₋₄ alkoxy, nitro and methylenedioxy groups.

Preferably, A represents a halogen atom. A preferred halogen atom is a fluorine or chlorine atom, with a fluorine atom being especially preferred.

Preferably, B represents a halogen atom. A preferred halogen atom is a fluorine or chlorine atom.

Preferably, n is 0 or 1. Where n is 1, preferably said atom or group A is substituted in the 4-position relative to the cyanomethyl group in the compound of general formula I.

Preferably, m is 0.

Where R¹ represents a group of general formula II, R² and R³ may independently represent a halogen atom or an optionally substituted C₁₋₂ alkyl group. Preferably, R² and R³ independently represent a bromine or chlorine atom or a trifluoromethyl group. Where R² and R³ each represent a halogen atom, R² and R³ preferably represent the same halogen atom. Where R² represents a trifluoromethyl group, R³ preferably represents a chlorine atom.

Where R¹ represents a group of general formula III, R⁴ preferably represents a phenyl group optionally substituted by one or more halogen atoms. Preferred halogen atoms include fluorine and chlorine atoms. R⁴ preferably represents a 4-substituted phenyl group and, more preferably, represents a phenyl group substituted by a chlorine atom. Most preferably, R⁴ represents a 4-chlorophenyl group.

Preferably, said pyrethroid insecticide for use in the method of the present invention is selected from alpha cypermethrin, deltamethrin, cyfluthrin and esfenvalerate. Most preferably, said pyrethroid insecticide is alpha cypermethrin.

The pyrethroid insecticide may be prepared using known processes, for example, as described in the aforementioned patent publications.

The solid concentrate may be prepared by dissolving polyvinylpyrrolidone and at least one pyrethroid insecticide in a solvent, followed by removal of the solvent from the resulting solution to yield the solid concentrate.

The solvent selected for use in the process for the preparation of the concentrate must be one in which both the pyrethroid insecticide and polyvinylpyrrolidone are sufficiently soluble. Such solvents are readily identifiable by routine experimentation. Examples of suitable solvents include haloalkanes, preferably having from one to eight carbon atoms, more preferably from one to four carbon atoms, ketones, preferably acetone and alcohols, preferably the lower alcohols having from one to eight carbon atoms, more preferably one to four carbon atoms. Preferred solvents are chloroalkanes having from one to four carbon atoms, with dichloromethane and trichloromethane being especially preferred.

Removal of the solvent may be effected by methods well known to a person skilled in the art, for example by allowing the solution of the pyrethroid and polyvinylpyrrolidone to stand and allowing the solvent to evaporate. Preferably, the solvent is removed from the solution by evaporation at a pressure below atmospheric pressure. Evaporation of the solvent at a pressure below atmospheric pressure may be effected using conventional vacuum drying techniques and apparatus at a pressure down to the minimum operating pressure of the apparatus. Solvent removal is preferably effected at a pressure below 400 mbar (4x10⁴ Nm⁻²). Alternatively, solvent removal may be effected by conventional spray drying techniques. As a further alternative, the solvent may be removed by treating the solution with a further solvent to cause the pyrethroid and polyvinylpyrrolidone to precipitate. Such further solvents are readily identified by routine experiment. One example of such a solvent is hexane.

Once the solvent has been removed, the resulting solid concentrate may be pressed (without heating) into tablet form or aggromerated into granules. Alternatively, the solid concentrate may be crushed or ground to reduce the particle size and so aid dispersion.

Preferably, the solid concentrate is prepared by co-extruding a pyrethroid insecticide with polyvinylpyrrolidone, subsequently cooling the extrudate until brittle, and then milling.

Milling is a process of, primarily, crushing, grinding and pulverising, which produces minute granules of extrudate. If desired, the milled extrudate can be pressed (without heating) into tablet form or agglomerated into granules without loss of the rapid dispersal characteristics.

The cooling of the extrudate should be carried out straight after the extrusion process and may be effected in any suitable, conventional manner. It has been found useful to run the extrudate onto a roller assembly which is cooled, for example by using chilled water or optionally a chilled water-antifreeze mixture. The extrudate is preferably cooled rapidly to a temperature in the range of from 5 to 25°C, especially 10 to 15°C. The extrudate can then be run off or, if necessary, scraped or chipped off, the roller and conveyed direct to suitable milling equipment, for example a hammer mill or preferably a roll mill. Using a combined chill roller and roll mill assembly, it may be possible to perform both the cooling and milling operations in one piece of equipment.

Following milling, it is preferable to classify or screen the particulate extrudate, to obtain a particle size which is optimal for use or subsequent processing. Undersized particles could be recycled to the extrusion stage; oversized particles could be recycled to the milling stage.

The milling equipment is suitably such as to achieve particles of a granular consistency, having for example a diameter in the region of 250 micrometers. A solid formulation prepared in this manner has little associated dust once sieve-cut to cause particular handling or product loss problems.

For the extrusion itself, any suitable extrusion equipment may be utilised. Extruders consist, generally, of a cylindrical barrel in which materials are heated and moved through the barrel by means of at least one rotating screw. Thus, the action in the barrel is one of shearing, rubbing and kneading at elevated temperature. In this way, the pyrethroid and the polyvinylpyrrolidone become mixed on a molecular scale and under the combination of externally applied heat and the internal shear force, which creates more internal heat within the mixture, a solid solution of pyrethroid in the polyvinylpyrrolidone is formed.

Suitable extrusion equipment is a twin screw, co-rotating extruder, such as is used in the food processing, pharmaceutical and polymer processing industries. Typically, extrusion is carried out in a twin screw extruder having a barrel with a cooled feed zone and with at least one melt zone. For two or more melt zones, each melt zone is of a different temperature in accordance with a graduated temperature profile. The melt temperature or temperature profile is suitably such that the extrudate on leaving the extruder barrel has a temperature in the range of from 50 to 200°C for example from 150 to 200°C, but preferably from 80 to 200°C. There may be several zones in the extruder barrel, for example from 4 to 9, each having a defined temperature usually obtained by the combination of external electrical heating of the barrel, internal shear forces and, if necessary, water cooling. The temperature of the mixed materials within the barrel is often significantly higher than the applied temperature in view of the heat generated by the internal shear force; to maintain a defined temperature for each zone, external cooling, e.g. by water, as well as heating may be required. The extruder may incorporate a die plate to aid subsequent extrudate processing, but in fact there is no need to have a die plate and if, for example, a chill roller or chill roller/mill assembly is also used, it is preferable that there should be no die plate on the machine. The extruder may also incorporate a separate preliminary mixing section, if needed.

Any pyrethroid can be formulated using the co-extrusion process described above, provided that it dissolves in polyvinylpyrrolidone to form a solid solution and does not chemically decompose during extrusion. The temperature profile of the extrusion process will need to be adapted to operate at temperatures compatible with the fusion points of the pyrethroid and the polyvinylpyrrolidone. Preferably extrusion is carried out at or especially above the fusion point of the pyrethroid/polyvinylpyrrolidone mixture. Furthermore, the amount of pyrethroid used will depend on the degree to which it is soluble in the polyvinylpyrrolidone. Exceeding the solubility limit of pyrethroid in polyvinylpyrrolidone it is still possible to prepare a solid formulation by the process of the invention but the dispersion and biological characteristics may be impaired. Naturally for each pyrethroid, such optimisation of operation temperature and ingredient proportions for the process can be carried out by routine experimentation. Suitably, a pyrethroid having a melting temperature in the range of from 60°C to 200°C is used.

Polyvinylpyrrolidone is a well known commercial product available in various forms from, for example, the companies BASF and ISP; the water-soluble polymer and its preparation is described in, inter alia, The Merck Index, 11th Edition, Monograph 7700. Suitable polyvinylpyrrolidone polymers for use in the present invention are any of the available forms, without restriction. Desirably they have a Fikentscher K value, see US-A-2,706,701 or Cellulose-Chemie 13 (1932), pages 58 to 64 and 71 to 74, of in the range of from 10 to 100 reflecting a molecular weight of from 5,000 to 700,000. Preferred polyvinylpyrrolidone polymers have a K value of 20 to 40, especially 25 to 35. The polymer is desirably a homopolymer of vinylpyrrolidone monomers, but may be used as a copolymer provided that at least 50% or more of the polymer units are vinyl pyrrolidone monomers.

The polyvinylpyrrolidone may be made in any conventional manner, for example by polymerisation initiated by hydrogen peroxide or an organic peroxide in a suitable solvent such as water or a suitable organic solvent.

Naturally, where the solid concentrate is made by co-extrusion, the polyvinylpyrrolidone must fuse at the operating temperature of the extruder, and it may be necessary to select a compatible polyvinylpyrrolidone based on the melting point of the active ingredient and the consequent extrusion temperature required. For extrusion with alpha-cypermethrin, "Agrimer 30" a polyvinylpyrrolidone polymer available from ISP has been found to be very suitable. Agrimer 30 has a K value of 30. This polyvinylpyrrolidone has a glass transition temperature of 156 to 157°C; when mixed with alpha-cypermethrin, which has a melting point of 77°C, a typical glass transition temperature of the mixture is of the order of 146°C. A suitable operating extrusion temperature or temperature profile for such mixtures is such that the extrudate is a melt having a temperature of above 77°C and desirably above 110°C (as determined by routine experimentation); such mixtures have been satisfactorily extruded up to 185°C.

Polyvinylpyrrolidone prepared by polymerisation in water may often have a higher water content (of the order of 5% by weight); polyvinylpyrrolidone prepared by other means can also imbibe water from the atmosphere because of its hygroscopic nature. Where the solid concentrate is made by co-extrusion, the water content of the polyvinylpyrrolidone prior to extrusion is not critical. Should polyvinylpyrrolidone having a water content of greater than say 3.5% by weight be used, and it is desired to have a low residual water content in the extrudate, preferably water vapour is drawn off under vacuum, for example by means of a vacuum pump, during extrusion. Thus, preferably, an extruder is used which has one or more vent ports, to vent moisture, associated with a vent port stuffer, to prevent loss of solid material through the vent port, and a vacuum pump to remove water vapour.

The minimum quantity of polyvinylpyrrolidone in the solid concentrate is dependent upon the desired extent and rate of dispersion of the concentrate in water. The quantity of polyvinylpyrrolidone present in the solid concentrate is preferably greater than 50% w/w, more preferably in the range of from 50% w/w to 90% w/w, the most preferred range being from 60% w/w to 70% w/w.

In addition to polyvinylpyrrolidone and a pyrethroid insecticide, the solid concentrate may comprise other components common to the art of aphicidal formulations, for example surface active agents, corrosion inhibitors and stabilisers. In addition, the solid concentrate may comprise one or more inert fillers. However, if the aforementioned other components or fillers are present in the solid concentrate, the ratio of pyrethroid compound to polyvinylpyrrolidone is preferably in the range of from 1:1 to 1:5, most preferably from about 1:2 to 1:3.

Inclusion of a surface active agent in the solid concentrate is not necessary to ensure a ready and rapid dispersion of the pyrethroid compound in water. However, examples of suitable surface active agents that may be included in the concentrate are the sodium salts of xylene sulphonates, the sodium salts of alkylbenzenesulphonates, the sodium or calcium salts of polyacrylic acids and lignin sulphonic acids and sodium or calcium salts of carboxylic acids. A group of the most suitable surface active agents is the sodium lignosulfonates, for example the commercial product "VANISPERSE" (Trade Mark).

Suitable inert fillers for inclusion in the concentrate include natural and synthetic clays and silicates, for example natural silicas such as diatomaceous earths; magnesium silicates, for example talcs; magnesium aluminium silicates, for example kaolinites, montmorillonites and micas; calcium carbonate, calcium sulphate; ammonium sulphate; synthetic calcium or aluminium silicates; elements, for example carbon and sulphur; natural and synthetic resins, for example coumarone resins, polyvinyl chloride, and styrene polymers and copolymers; solid polychlorophenols and solid fertilisers, for example superphosphates.

Where the solid concentrate includes other ingredients common to the art, these may, when the concentrate is made by using the solvent removal process described above, conveniently be dissolved in or suspended in the solution of pyrethroid and polyvinylpyrrolidone prior to solvent removal.

Where the solid concentrate is made by co-extrusion of pyrethroid and polyvinylpyrrolidone, said other ingredients may be co-extruded with the pyrethroid and polyvinylpyrrolidone. Additional active ingredients or processing auxiliaries, for example conventional plasticisers, may be used.

Any additional ingredients utilised in a co-extrusion process will depend on the end use of the formulation and/or the main extrusion ingredients. Thus, for example, for extrusion of alpha-cypermethrin technical material, which is a racemic mixture of two cis-2-isomers as described above, the extrusion material must be rendered slightly acidic to prevent epimerisation or inversion of the cis-2-isomers to the cis-1-isomers. Suitably in the range of from 0.5 to 0.9 % m/m of an organic acid for example benzoic acid or, preferably, toluene sulphonic acid, is included in the ingredients for extrusion; useful results are also expected from the incorporation of water soluble salts such as potassium hydrogen sulphate or sodium sulphate; potassium hydrogen sulphate is especially preferred. Preferably, however, no processing auxiliaries are included in the extrusion stage.

In a second aspect of the present invention, there is provided a method of combating aphid pests at a locus, the method comprising applying to the locus an aqueous dispersion of polyvinylpyrrolidone and a pyrethroid insecticide.

In a third aspect, the invention extends to the use of a solid concentrate which comprises polyvinylpyrrolidone and a pyrethroid insecticide for the preparation of an aqueous solution for combating aphid pests.

In a fourth aspect, the invention extends to the use of an aqueous dispersion prepared by dispersing a solid concentrate which comprises polyvinylpyrrolidone and a pyrethroid insecticide in water for combating aphid pests.

The solid concentrate and/or the pyrethroid insecticide of said second and/or third and/or fourth aspects may be as described above with reference to the first aspect of the invention.

The following examples illustrate the invention.

Certain terms used in the examples are explained below.

FASTAC is a trade name for alpha-cypermethrin and is particularly a racemate comprising (S)α-cyano-3-phenoxybenzyl(1R)-cis-3-(2,2-dichloro-vinyl)-2,2 dimethylcyclopropanecarboxylate and (R)-α-cyano-3-phenoxybenzyl(1S)-cis-3-(2,2-dichlorovinyl)-2,2-dimethylcyclo-propanecarboxylate.

DECIS is a Trade name for deltamethrin which is (S)-α-cyano-3-phenoxybenzyl(1R)-cis-3-(2,2-dibromovinyl)-2,2-dimethylcyclopropanecarboxylate.

BAYTHROID is a Trade name for cyfluthrin which is (RS)-α-cyano-4-fluoro-3-phenoxybenzyl(1RS)-cis-trans-3-(2,2-dichlorovinyl)-2,2-dimethylcyclopropanecarboxylate.

Esfenvalerate is (S)-α-cyano-3-phenoxybenzyl(S)-2(4-chlorophenyl)-3-methylbutyrate.

"m/m" means "mass/mass"; "ai" means "active ingredient"; "wg" means "water dispersible granules"; "TB" means "tablet form"; "SC" means "suspension concentrate"; "EC" means "emulsion concentrate".

### Example 1

### Preparation of FASTAC/polyvinylpyrrolidone solid concentrate (333g/Kg ai).

A blend of the following powdered materials was mixed using a core blender:

| | % m/m |
|---|---|
| FASTAC (technical material, from Shell International Chemical Company) | 333 |
| polyvinylpyrrolidone, (Agrimer 30 from ISP (Europe) Ltd) | 662 |
| benzoic acid | 5 |

A sample of 5 kg of blended material was fed into an APV MP2030 twin screw co-rotating extruder, 25:1 L/D (length over diameter). A K-tron T20 volumetric feeder with agitated hopper was used to feed the extruder. The extruder barrel which was electrically heated and water cooled was fitted with a vacuum pump via a vent port for use when a melt seal had formed. The barrel melt zone temperatures (nine in all) were set between 25 and 75 degrees centigrade (beginning to end of barrel) to 25 to 175 degrees centigrade (beginning to end of barrel).

A vacuum was drawn once a melt seal had formed in order to remove the water vapour that formed in the barrel from the residual moisture content of the polyvinylpyrrolidone. The extruder screws were constructed to give at least one conveyor section followed by a paddle shearing/mixing section. The extrudate was finally conveyed to the end of the barrel and extruded without a die-plate directly onto a chill roller (chilled with water at 4 degrees centigrade). The extrudate was rapidly cooled to a brittle glassy material on the rollers and removed as chips by pegs rotating near the surface of the larger of the two chill rollers. The chipped material was hammer milled and sieve cut to approximately 250 micrometers. It was then mixed with typical tabletting inerts and compressed to a tablet using a tabletting machine.

The extrudate showed no detectable crystalline FASTAC using differential scanning calorimetry (Perkin-Elmer DSC 7 machine) when heated through the normal melting temperature of FASTAC.

### Example 2

### Preparation of Deltamethrin/polyvinylpyrrolidone solid concentrate (WG)

A 90g/kg solid concentrate of deltamethrin and polyvinylpyrrolidone was prepared by a solvent evaporation technique, as follows:

Deltamethrin and polyvinylpyrrolidone were dissolved in a solvent blend 90:10 acetone : methanol. The solution was evaporated to dryness using a rotary evaporator. The solid residue was then crushed.

### Examples 3 to 6

By processes analogous to the processes described in Examples 1 and 2, the active ingredient/polyvinylpyrrolidone formulations noted in Table 1 were prepared. Table 1 also includes data for Examples 1 and 2, for ease of reference.

**TABLE 1**

| EXAMPLE NO. | PREPARED BY PROCESS OF EXAMPLE: | ACTIVE INGREDIENT | CONCENTRATION ai m/m | WG or TB |
|---|---|---|---|---|
| 1 | 1 | FASTAC | 333g/kg | WG |
| 2 | 2 | Deltamethrin | 90g/kg | WG |
| 3 | 2 | Cyfluthrin | 90g/kg | WG |
| 4 | 2 | Esfenvalerate | 77g/kg | WG |
| 5 | 1 | FASTAC | 350g/kg | WG |
| 6 | 1 | FASTAC | 150g/kg | TB |

### Comparative Example C1

### Preparation of FASTAC emulsion concentrate (EC) formulation.

A 100g/l emulsion concentrate of FASTAC was prepared as follows:

FASTAC was dissolved to homogeneity in the solvents SHELLSOL A (Trade Mark) (an aromatic solvent blend) and cylcohexanone, together with a pair of commercial emulsifiers.

### Comparative Example C2

### Preparation of FASTAC suspension concentrate (SC) formulation

A 250g/l suspension concentrate of FASTAC was prepared as follows:

FASTAC was slurried in water in which a commercial dispersant (ORTAN 731 (Trade Mark) (Rohm & Haas)) was dissolved. The slurry was milled to a volume median diameter in the range 2 to 2.5 µm. Afterwards, xanthan gum (ex. Kelco International Limited) was added to a concentration of 3g/kg in the total formulation, to prevent particle settling.

### Comparative Examples C3 to C6.

By processes analogous to the processes described in Comparative Examples C1 and C2, the formulations noted in Table 2 were prepared. Table 2 also includes data for Comparative Examples C1 and C2, for ease of reference.

**TABLE 2**

| COMPARATIVE EXAMPLE NO. | PREPARED BY PROCESS OF COMPARATIVE EXAMPLE NO. | ACTIVE INGREDIENT (ai) | CONCENTRATION OF ai | SC or EC |
|---|---|---|---|---|
| C1 | C1 | FASTAC | 100g/l | EC |
| C2 | C2 | FASTAC | 250g/l | SC |
| C3 | C2 | Decis(deltamethrin) | 25g/l | SC |
| C4 | C1 | Decis(deltamethrin) | 25g/l | EC |
| C5 | Cl | Baythroid(cyfluthrin) | 50g/l | EC |
| C6 | C1 | Esfenvalerate | 25g/l | EC |

### Assessment of Aphicidal activity against pea aphids (Acyrthosiphum pisum).

### Example 7

The aphicidal activity of the FASTAC/polyvinylpyrrolidone formulation of Example 1 was compared with that of the FASTAC 100g/l emulsion concentrate formulation of Comparative Example C1 and of the FASTAC 250 g/l suspension concentrate formulation of Comparative Example C2 as follows:
(i) Each formulation was diluted with tap water to provide a series of spray concentrations spanning the expected LC₉₉ (the dosage of active ingredient required to kill 99% of the test species) to LC₅₀ (the dosage of active ingredient required to kill 50% of the test species) range. The top spray concentration applied, 0.0025%, was estimated to be equivalent to 10 g active ingredient/hectare (ai/ha), the rate of FASTAC currently recommended for control of pea aphids. Lower concentrations were applied where necessary.
(ii) 6 cm tall pea seedlings were placed on their sides in 9 cm diameter petri dishes lined with filter paper. Ten adult pea aphids (Acyrthosiphum pisum) were introduced into each petri dish and the aphids allowed to settle before spraying with the formulations described above. Assessments of knockdown activity and mortality were made 1 hour and 24 hours after treatment.

### Results

The activity of the FASTAC formulations against pea aphids (Acyrthosiphum pisum) as assessed 24 hours after treatment is shown in Table 3.

Additionally, it was observed that the knockdown was extremely rapid for each of the FASTAC formulations referred to in Table 3. Each formulation achieved complete knockdown within half-an-hour.

**TABLE 3**

| **Activity of FASTAC against pea aphid (Acyrthosiphum pisum) by direct spray** | | | | | | | |
|---|---|---|---|---|---|---|---|
| Treatment | Concentration % ai * | 24 hour % Acyrthosiphum pisum mortality | | | | | |
| | | 1 | | | 2 | | Mean (n=5) |
| FASTAC 100 g/l emulsion concentrate of Example C1 | 0.00125 | 100 | 100 | 100 | 100 | 100 | 100 |
| | 0.0006 | 100 | 100 | 80 | 100 | 100 | 96 |
| | 0.0003 | 80 | 60 | 80 | 90 | 90 | 80 |
| | 0.00015 | 60 | 70 | 70 | 50 | 20 | 54 |
| 250 g/l suspension concentrate of Example C2 | 0.0025 | - | - | - | 40 | 60 | 50 |
| | 0.00125 | 80 | 40 | 60 | 20 | 60 | 52 |
| | 0.0006 | 30 | 50 | 50 | 20 | 20 | 34 |
| | 0.0003 | 60 | 50 | 40 | 10 | 0 | 32 |
| | 0.00015 | 30 | 40 | 20 | - | - | 30 |
| 333 g/kg FASTAC/PVP formulation of Example 1 | 0.00125 | 90 | 80 | 60 | 100 | 100 | 86 |
| | 0.0006 | 80 | 80 | 80 | 90 | 100 | 86 |
| | 0.0003 | 50 | 60 | 80 | 100 | 100 | 78 |
| | 0.00015 | 30 | 50 | 50 | 100 | 100 | 66 |
| | | 0 | 0 | 10 | 0 | 0 | |

| | | | | | | | |
|---|---|---|---|---|---|---|---|
| * Spray concentration of 0.00125% is equivalent to 5 g ai/ha | | | | | | | |

### Example 8

The aphicidal activity of the polyvinpyrrolidone formulations of Examples 2 to 6 was compared with that of the formulations of Comparative Examples C1 to C6, as follows:

The formulations were diluted with tap water to a concentration of 0.001% active ingredient (ai) from which a further four half dilutions were prepared. The individual solutions were applied to a petri dish containing a pea seedling infested with ten adult pea aphids (Acyrthosiphum pisum). Treatments were applied at a volume rate of approximately 400 l/ha (i.e. 0.001% ai equates to a dose rate of ∼4g ai/ha). Depending on the activity/inactivity of individual formulations in a first test, adjustments to the dose range applied were made for some formulations in repeat tests.

Speed of action was assessed by recording % knockdown (KD) after 1 hour whilst mortality was assessed after 24 hours. The dose/KD and dose/mortality data were analysed to estimate the concentrations achieving 50% KD after 1 hour and 50% mortality (LC50) after 24 hours. Each formulation was tested twice and the data averaged.

In addition to LC50 values, toxicity indices (TI's) relative to a standard were calculated. By taking the commercial FASTAC EC formulation of Comparative Example C1 as the "standard" in this case, it is ascribed a TI of 100. Consequently any formulation less active than the FASTAC EC will have a TI of <100 or if more active it will have a TI >100.

### Results

The results for Example 8 are summarised in Table 4.

**TABLE 4**

| Formulation of Example No. | 1 hour KD | | 24 hour mortality | |
|---|---|---|---|---|
| | LC50 | TI | LC50 | TI |
| 2 | 0.000053 | 210 | 0.00016 | 210 |
| C3 | >0.001 | <10 | 0.00053 | 65 |
| C4 | 0.000095 | 130 | 0.00012 | 290 |
| 3 | 0.00039 | 29 | 0.00052 | 68 |
| C5 | 0.00029 | 39 | 0.00053 | 65 |
| 5 | 0.000040 | 230 | 0.00010 | 290 |
| C7 | 0.000058 | 170 | 0.000094 | 310 |
| 6 | 0.00011 | 100 | 0.00034 | 100 |
| 7 | 0.00012 | 92 | 0.00031 | 110 |
| C1 | 0.00010 | 100 | 0.00031 | 100 |

## Claims

1. A method of combating aphid pests at a locus, the method comprising applying to the locus an aqueous dispersion prepared by dispersing a solid concentrate which comprises a pyrethroid insecticide and greater than 50% w/w polyvinylpyrrolidone in water.

2. A method as claimed in Claim 1, wherein said pyrethroid insecticide is of general formula: 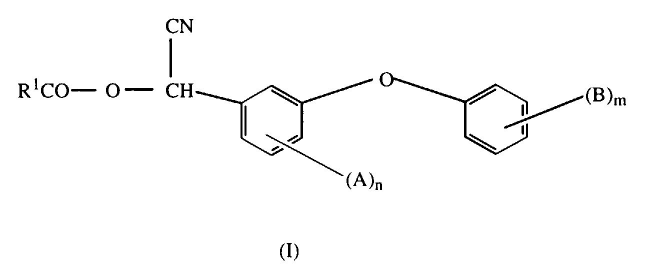 where A and B independently represent a halogen atom or a methyl group; n is 0, 1 or 2, m is 0, 1 or 2; and R^{¹} represents a group of general formula: 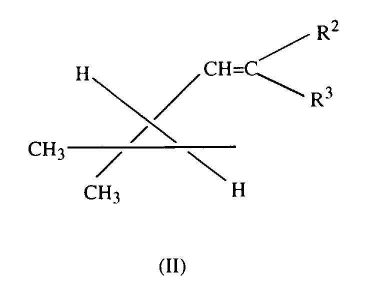 where R² and R³ independently represent a hydrogen or halogen atom, or an optionally substituted C₁₋₄ alkyl group; or R¹ represents a group of general formula: 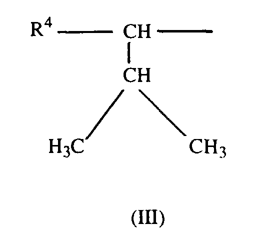 where R⁴ represents a phenyl group optionally substituted by one or more substituents independently selected from halogen atoms, or C₁₋₄ alkyl, C₁₋₄ alkylthio, C₁₋₄ alkoxy, nitro and methylenedioxy groups.

3. A method as claimed in Claim 1 or Claim 2, wherein said pyrethroid insecticide is selected from alpha cypermethrin, deltamethrin, cyfluthrin and esfenvalerate.

4. A method as claimed in any preceding claim, wherein said solid concentrate is prepared by dissolving polyvinylpyrrolidone and a said pyrethroid insecticide in a solvent, followed by removal of the solvent from the resulting solution to yield the solid concentrate.

5. A method as claimed in any of Claims 1 to 3, wherein the solid concentrate is prepared by co-extruding a said pyrethroid insecticide with polyvinylpyrrolidone, subsequently cooling the extrudate until brittle, and then milling.

6. A method of preparing a solid concentrate which comprises a pyrethroid insecticide and polyvinylpyrrolidone wherein the solid concentrate is prepared by co-extruding a said pyrethroid insecticide with polyvinylpyrrolidone, subsequently cooling the extrudate until brittle, and then milling.

7. Use of a solid concentrate as defined in claim 1 for the preparation of an aqueous dispersion for combating aphid pests.

## Patentansprüche

1. Verfahren zum Bekämpfen von Aphid-Schädlingen an einem Ort, das Verfahren umfassend: Auftragen einer wässerigen Dispersion auf den Ort, hergestellt durch Dispergieren eines Feststoffkonzentrats, welches ein pyrethroides Insektizid und größer als 50% M/M Polyvinylpyrrolidon in Wasser umfaßt.

2. Verfahren wie in Anspruch 1 beansprucht, wobei besagtes pyrethroides Insektizid von der allgemeinen Formel: 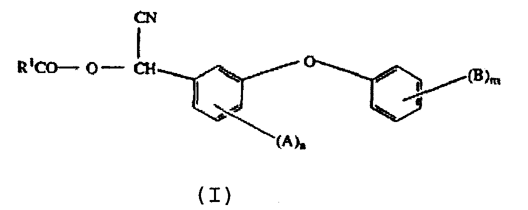 ist, worin A und B unabhängig ein Halogenatom oder eine Methyl-Gruppe darstellen, n 0, 1 oder 2 ist, m 0, 1 oder 2 ist; und R¹ eine Gruppe der allgemeinen Formel: 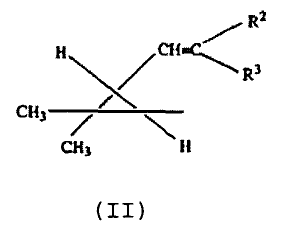 darstellt, worin R² und R³ unabhängig ein Wasserstoff- oder Halogenatom oder eine gegebenenfalls substituierte C₁₋₄-Alkyl-Gruppe darstellen; oder R¹ eine Gruppe der allgemeinen Formel: 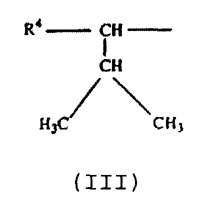 darstellt, worin R⁴ eine Phenyl-Gruppe, gegebenenfalls substituiert durch ein oder mehrere Substituenten, unabhängig ausgewählt aus Halogenatomen oder C₁₋₄-Alkyl-, C₁₋₄-Alkylthio-, C₁₋₄-Alkoxy-, Nitro- und Methylendioxy-Gruppen darstellt.

3. Verfahren wie in Anspruch 1 oder Anspruch 2 beansprucht, wobei besagtes pyrethroides Insektizid ausgewählt wird aus Alpha-Cypermethrin, Deltamethrin, Cyfluthrin und Esfenvalerat.

4. Verfahren wie in einem der vorhergehenden Ansprüche beansprucht, wobei besagtes Feststoffkonzentrat durch Lösen von Polyvinylpyrrolidon und einem besagten pyrethroiden Insektizid in einem Lösungsmittel, gefolgt von Entfernen des Lösungsmittels aus der sich ergebenden Lösung hergestellt wird, um das Feststoffkonzentrat zu erbringen.

5. Verfahren wie in einem der Ansprüche 1 bis 3 beansprucht, wobei das Feststoffkonzentrat durch Co-Extrudieren eines besagten pyrethroiden Insektizids mit Polyvinylpyrrolidon, nachfolgend Kühlen des Extrudats bis brüchig und dann Mahlen hergestellt wird.

6. Verfahren zum Herstellen eines Feststoffkonzentrats, welches ein pyrethroides Insektizid und Polyvinylpyrrolidon umfaßt, wobei das Feststoffkonzentrat durch Co-Extrudieren eines besagten pyrethroiden Insektizids mit Polyvinylpyrrolidon, nachfolgend Kühlen des Extrudats bis brüchig und dann Mahlen, hergestellt wird.

7. Verwendung eines Feststoffkonzentrats, wie in Anspruch 1 definiert, für die Herstellung einer wässerigen Suspension zum Bekämpfen von Aphid-Schädlingen.

## Revendications

1. Procédé de lutte contre les pucerons sur un site, le procédé comprenant l'application au site d'une dispersion aqueuse préparée en dispersant un concentré solide qui comprend un insecticide pyréthroïde et plus de 50% en p/p de polyvinylpyrrolidone dans de l'eau.

2. Procédé selon la revendication 1, dans lequel ledit insecticide pyréthroïde a pour formule générale : 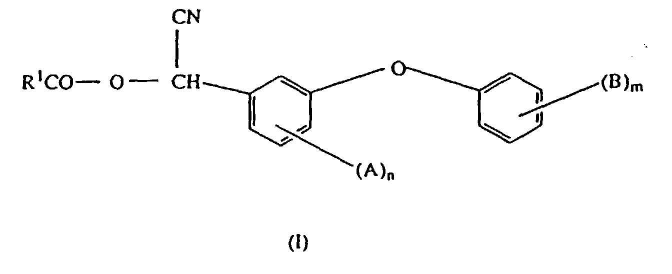 dans laquelle A et B représentent indépendamment un atome d'halogène ou un groupe méthyle; n est 0, 1 ou 2, m est 0, 1, ou 2; et R¹ représente un groupe de formule générale : 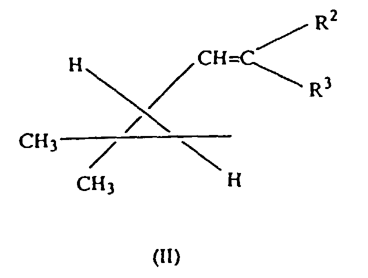 dans laquelle R² et R³ représentent indépendamment un atome d'hydrogène ou un atome d'halogène ou un groupe alkyle en C₁₋₄ éventuellement substitué; ou R¹ représente un groupe de formule générale : 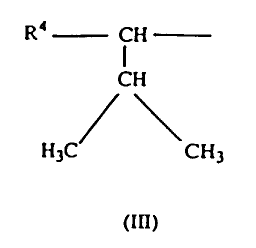 dans laquelle R⁴ représente un groupe phényle éventuellement substitué par un ou plusieurs substituants indépendamment choisis parmi les atomes d'halogène ou les groupes alkyle en C₁₋₄, alkylthio en C₁₋₄, alcoxy en C₁₋₄, nitro et méthylènedioxy.

3. Procédé selon la revendication 1 ou 2, dans lequel ledit insecticide pyréthroïde est choisi parmi l'alpha-cyperméthrine, la delta-méthrine, la cyfluthrine et l'esfenvalérate.

4. Procédé selon l'une quelconque des revendications précédentes, dans lequel ledit concentré solide est préparé en dissolvant de la polyvinylpyrrolidone et ledit insecticide pyréthroïde dans un solvant, le tout étant suivi de l'extraction du solvant de la solution obtenue pour donner le concentré solide.

5. Procédé selon l'une quelconque des revendications 1 à 3, dans lequel le concentré solide est préparé par co-extrusion d'un dit insecticide pyréthroïde avec de la polyvinylpyrrolidone, refroidissement ultérieur de l'extrudat jusqu'a ce qu'il soit cassant, puis broyage.

6. Procédé de préparation d'un concentré solide qui comprend un insecticide pyréthroïde et de la polyvinylpyrrolidone, dans lequel le concentré solide est préparé par co-extrusion d'un dit insecticide pyréthroïde avec de la polyvinylpyrrolidone, refroidissement ultérieur de l'extrudat jusqu'a ce qu'il soit cassant, puis broyage.

7. Utilisation d'un concentré solide selon la revendication 1 pour la préparation d'une dispersion aqueuse pour lutter contre les pucerons.
